# EUROPÄISCHE PATENTANMELDUNG

(11) **EP 2 333 344 A2**
(43) Veröffentlichungstag der Anmeldung: **15.06.2011**
(21) Anmeldenummer: 10191203.8
(22) Anmeldetag: 15.11.2010
(51) Int. Cl.: F04D 19/04, F04D 29/058, F04D 29/059, F04D 29/056

(54) **Vakuumpumpe**

(30) Priorität: 26.11.2009 DE 102009055888
(71) Anmelder: Oerlikon Leybold Vacuum GmbH, 50968 Köln (DE)
(72) Erfinder: Odendahl, Heinz-Dieter, 51061 Köln (DE); Henry, Markus, 51109 Köln (DE); Beyer, Christian, 50765 Köln (DE); Engländer, Heinz, 52441 Linnich (DE); Hölzer, Rainer, 5035 Hürth (DE)
(74) Vertreter: von Kreisler Selting Werner

(57) **Zusammenfassung**

Eine Vakuumpumpe, bei der es sich insbesondere um eine Turbomolekularpumpe oder eine Multi-Inlet-Pumpe handelt, weist eine Rotorwelle (12) auf, die mindestens eine Rotoreinrichtung (14) trägt. Die Rotorwelle (12) ist druckseitig von einer Lageranordnung (56) und saugseitig von einer Lageranordnung (30) gelagert. Erfindungsgemäß weist die saugseitige Lageranordnung (30) ein elektromagnetisches Lager auf. Erfindungsgemäß weist die druckseitige Lageranordnung (56), um eine möglichst lange Rotorwelle (12) ausbilden zu können, ein Kugellager (58) auf. Dieses ist vorzugsweise durch das elektromagnetische Lager (30) vorgespannt.

## Beschreibung

Die Erfindung betrifft eine Vakuumpumpe, insbesondere eine Turbomolekularpumpe oder Multi-Inlet-Turbomolekularpumpe.

Turbomolekularpumpen weisen eine mindestens einen Rotor mit mehreren Rotorscheiben aufweisenden Rotoreinrichtung auf. Zwischen den Rotorscheiben sind von Statorringen gehaltenen Statorscheiben angeordnet. Die Rotoreinrichtung ist auf einer schnell rotierenden Rotorwelle angeordnet. Turbomolekularpumpen weisen einen saugseitigen Einlass sowie einen druckseitigen Auslass auf. Am saugseitigen Einlass können Enddrücke von ggf. weniger als 1 · 10⁻¹⁰ mbar erzielt werden. An dem druckseitigen Pumpenanschluss sind häufig zusätzliche Vorvakuumpumpen angeschlossen.

Multi-Inlet-Pumpen weisen zusätzlich zu einem saugseitigen Haupteinlass mindestens einen Zwischeneinlass auf. Üblicherweise weist die Rotoreinrichtung einer Multi-Inlet-Pumpe zwei, beispielsweise als Turbomolekularstufen ausgebildete, Pumpstufen auf, wobei zwischen den beiden Pumpstufen der Zwischeneinlass angeordnet ist. In Förderrichtung den Turbomolekularstufen nachgeordnet ist häufig eine weitere Pumpstufe, wie eine Holweck-Stufe, vorgesehen. Durch Multi-Inlet-Pumpen können unterschiedliche Druckniveaus am Haupt- und an dem mindestens einen Zwischeneinlass erzielt werden.

Die Lagerung der Rotorwelle von insbesondere schnell drehenden Vakuumpumpen, wie Turbomolekularpumpen und Multi-Inlet-Pumpen, kann druckseitig, d.h. in Bereichen, in denen keine niedrigen Drücke herrschen, über elektromagnetische Lager erfolgen. Hierbei werden elektromagnetische Lager bei bekannten Vakuumpumpen in Druckbereichen bis zu 120 mbar eingesetzt. Ferner ist es bekannt, die Rotorwelle im Hochvakuumbereich durch passive Magnetlager zu lagern.

Der Einsatz von elektromagnetischen Lagern ist zur saugseitigen Lagerung einer Vakuumpumpe auf Grund der hier herrschenden niedrigen Drücke nicht üblich, da es sich bei den verwendeten Spulenkörpern und Sensoreinrichtungen um Komponenten mit großen Oberflächen und vielen Hohlräumen handelt. Hierdurch ist das Erreichen des gewünschten Enddrucks auf Grund des anhaltenden Ausgasens nicht oder zumindest nur schwer erzielbar. Ferner ist es bekannt, im Hochvakuumbereich passive Permanentmagnetlager einzusetzen.

Um die gesamte Rotorwelle elektromagnetisch lagern zu können, ist in DE 20 2005 019 644 vorgeschlagen, die beiden elektromagnetischen Lager innerhalb einer Kartusche anzuordnen. In der Kartusche ist die Rotorwelle zusammen mit den Lagern und dem Elektromotor angeordnet. Die Kartusche ist im Wesentlichen in Richtung der Druckseite offen, so dass in der Kartusche Atmosphärendruck oder zumindest ein relativ hoher, an der Druckseite der Pumpe anliegender Druck herrscht. Die Rotorwelle weist einen aus der Kartusche herausragenden Ansatz auf, der die Rotoreinrichtung trägt. Die Rotoreinrichtung ist somit an einem auskragenden Ende der Welle befestigt. Hierdurch ist die Baulänge der Pumpe beschränkt. Ferner treten auf Grund der Befestigung der Rotoreinrichtung auf dem auskragenden Wellenende an den Lagerstellen hohe Kräfte auf, so das entsprechend aufwändige elektromagnetische Lager vorgesehen sein müssen. Ebenso wird diese Bauart durch das rotordynamische Verhalten stark eingeschränkt, da insbesondere niedrige Eigenfrequenzen auftreten.

Ferner ist es beispielsweise aus US 6,416,290 bekannt, einen saugseitigen Rotor an einem auskragenden Ende der Rotorwelle vorzusehen. Das saugseitige Lager ist somit in Strömungsrichtung hinter dem ersten Rotor angeordnet und daher nicht den sehr niedrigen Drücken auf der Hochvakuumseite ausgesetzt. Da die Befestigung des Rotors somit bezogen auf das saugseitige Lager außerhalb des Lagers an einem auskragenden Ende der Welle erfolgt, treten in den Lagern hohe Kräfte und Momente auf.

Bei Turbomolekularpumpen und insbesondere beim Multi-Inlet-Pumpen, ist es zur Erhöhung der gesamten Pumpleistung sowie ggf, zur Erhöhung der Zwischeneinlässe erstrebenswert eine möglichst lange Rotorwelle vorzusehen, Mit bekannten Lageranordnungen ist die Länge der Rotorwelle aufgrund von maschinendynamischen Grenzen beschränkt. Bei vertretbaren Herstellungs-und Betriebskosten einer Turbomolekularpumpe oder einer Multi-Inlet-Pumpe betragen die maximalen Rotorlängen derzeit etwa 170 mm bei einem Rotordurchmesser von etwa 130 mm und einem Wellendurchmesser von etwa 8 mm.

Aufgabe der Erfindung ist es, eine Vakuumpumpe, insbesondere eine Turbomolekularpumpe oder eine Multi-Inlet-Pumpe, mit verlängerter Rotorwelle zu schaffen.

Die Lösung der Aufgabe erfolgt erfindungsgemäß durch die Merkmale des Anspruchs 1.

Die erfindungsgemäße Vakuumpumpe weist eine Rotorwelle auf, die eine Rotoreinrichtung trägt, wobei die Rotoreinrichtung ggf. mehrere Rotoren oder andere Saug- bzw. Pumpeinrichtungen aufweisen kann. Die Rotorwelle ist über üblicherweise zwei Lageranordnungen, eine druckseitige und eine saugseitige Lageranordnung, gelagert. Erfindungsgemäß handelt es sich bei der saugseitigen Lageranordnung um ein elektromagnetisches Lager zur radialen Lagerung der Rotorwelle. Mit Hilfe des elektromagnetischen Lagers erfolgt somit ausschließlich eine zweiachsige Lagerung der Rotorwelle. Eine Lagerung in axialer Richtung erfolgt hierbei vorzugsweise durch das elektromagnetische Lager nicht. Ferner ist erfindungsgemäß die druckseitige Lageranordnung, als Wälzlager, insbesondere als Kugellager ausgebildet. Hierbei wird erfindungsgemäß ein Wälzlager eingesetzt, bzw. das Wälzlager derart angeordnet, dass durch das Wälzlager sowohl eine axiale als auch eine radiale, das heißt eine dreiachsige Lagerung der Welle erfolgt. Aufgrund der erfindungsgemäßen Lageranordnung, ist es möglich eine lange Rotorwelle vorzusehen, die den hohen qualitativen Anforderungen, insbesondere auch an die Lebensdauer bei Turbomolekularpumpen oder Multi-Inlet-Pumpen entspricht. Dies hat insbesondere den Vorteil, dass eine Welle, die an den Wellenenden gelagert ist, zwischen den Lagern beliebig versteift werden kann, ohne auf Fügedurchmesser für passende Lager Rücksicht nehmen zu müssen. Durch die hohe Steifigkeit der Welle verschieben sich die biegekritischen Eigenfrequenzen weit weg von der Nennfrequenz der Pumpe. Da Lager, die in der Nähe der Eigenfrequenzen der Welle betrieben werden, zusätzlichen dynamischen Belastungen ausgesetzt sind, hat ein Betrieb weit weg von den Eigenfrequenzen positiven Einfluss auf die Lebensdauer der Lager.

Das Vorsehen eines elektromagnetischen Lagers auf der Saugseite hat den Vorteil, dass auch bei niedrigen Drücken eine Verunreinigung der Prozessgase vermieden ist. Bei der Verwendung von mit Schmiermittel versehenen Kugellagern auf der Hochvakuumseite würde aufgrund der niedrigen Drücke ein Ausgasen des Schmiermittels und somit ein Kontaminieren der Prozessgase erfolgen.

In besonders bevorzugter Ausführungsform dient die saugseitige Lageranordnung ausschließlich zur radialen Lagerung. Die Rotorwelle wird somit vorzugsweise saugseitig nicht axial gelagert. Das saugseitig vorgesehene elektromagnetische Lager kann allerdings vorzugsweise noch zur Vorspannung des druckseitig vorgesehenen Wälzlagers genutzt werden. Dies kann durch einen leichten axialen Versatz der Bauteile des elektromagnetischen Lagers erzielt werden. Die Vorspannung des Wälzlagers mit Hilfe des saugseitigen elektromagnetischen Lagers vorzunehmen, hat den Vorteil, dass keine gesonderte Vorspanneinrichtung, das heißt kein gesondertes Bauteil vorgesehen werden muss. Vielmehr ist die Vorspanneinrichtung durch das elektromagnetische Lager realisiert.

Ebenso ist es möglich, die Vorspannung des Wälzlagers mit Hilfe eines Elektromotors zu erzeugen. Der Elektromotor ist vorzugsweise derart angeordnet, dass er unmittelbar auf die Rotorwelle wirkt und somit die Rotorwelle unmittelbar von dem Elektromotor angetrieben wird. Durch einen entsprechenden axialen Versatz zwischen Magneten und Spulen des Elektromotors kann somit eine Vorspannung erzeugt werden. Dies hat entsprechend des Erzeugens der Vorspannung durch die elektromagnetische Lagerung, den Vorteil, dass kein zusätzliches Bauteil erforderlich ist.

Ebenso ist es möglich, eine gesonderte Vorspanneinrichtung vorzusehen. Hierbei kann als Vorspanneinrichtung beispielsweise ein vorzugsweise im Bereich des Wälzlagers angeordneter Magnet vorgesehen sein. Hierbei handelt es sich insbesondere um einen Permanentmagnet, der somit eine klar definierte Vorspannkraft aufbringt.

Besonders bevorzugt ist es, dass die saugseitige Lagerordnung und/oder die druckseitige Lagerordnung jeweils an einem Ende der Rotorwelle angeordnet ist. In bevorzugter Ausführungsform ist die Rotorwelle somit beidseitig nicht auskragend Insbesondere im Bereich des Hochvakuums erfolgt keine Auskragung der Rotorwelle. Dies ist aufgrund der erfindungsgemäßen Lageranordnung und Ausgestaltung möglich. Bei nicht-auskragenden Wellen treten in den Lagern der Rotorwelle einer Turbomolekularpumpe oder einer Multi-Inlet-Pumpe geringere Kräfte und Momente auf. Hierdurch ist es möglich, insbesondere im Bereich des elektromagnetischen Lagers eine Rotorwelle mit einem geringerem Durchmesser vorzusehen. Dies hat insbesondere den Vorteil, dass ein kleineres Fanglager vorgesehen werden kann. Dies führt zu Kostenersparnissen. In dieser bevorzugten Ausführungsform der Erfindung sind somit sämtliche Rotoreinrichtungen zwischen den Lagern angeordnet. Die Rotoreinrichtungen überdecken die Lager in axialer Richtung allenfalls, sind jedoch stets zwischen den Lageranordnungen mit der Rotorwelle verbunden.

Aufgrund der erfindungsgemäßen Ausgestaltung der Lageranordnungen können Rotorwellen mit einer Länge von mehr als 200 mm bei einem Rotordurchmesser von etwa 130 mm für Turbomolekularpumpen und Multi-Inlet-Pumpen realisiert werden.

Das elektromagnetische Lager der saugseitigen Lageranordnung ist vorzugsweise in einer Kartusche angeordnet. Hierdurch kann erreicht werden, dass insbesondere die Spule des Lagers in einem Bereich mit höherem Druck als dem saugseitig herrschenden Minimaldruck angeordnet ist.

Erfindungsgemäß kann die saugseitige Lageranordnung in einem Hochvakuumbereich angeordnet und somit niedrigen Drücken ausgesetzt werden. Ferner handelt es sich bei der saugseitigen Lageranordnung erfindungsgemäß um ein elektromagnetisches Lager. Unter Hochvakuum wird ein Druck von weniger als 10⁻³ mbar, insbesondere weniger als 10⁻⁵ mbar und besonders bevorzugt weniger als 10⁻¹⁰ mbar verstanden.

Insbesondere beim Anordnen des elektromagnetischen Lagers im Bereich von sehr niedrigen Drücken, wie sie auf der Saugseite, d.h. im Einlassbereich einer Turbomolekularpumpe, auftreten, erfolgt in einer besonders bevorzugten Ausführungsform ein Anordnen der Spule des elektromagnetischen Lagers in einer druckgekapselten Ausnehmung. Auf Grund der Anordnung der Spule in einer druckgekapselten Ausnehmung ist gewährleistet, dass die Spule selbst nicht unmittelbar im Hochvakuumbereich angeordnet ist. Hierdurch ist der Nachteil vermieden, dass auf Grund der zahlreichen Hohlräume innerhalb der Spule auf Grund des anhaltenden Ausgasens ein Erreichen des Enddrucks nicht oder nur schwer möglich ist. Durch das erfindungsgemäße Vorsehen eines elektromagnetischen Lagers im Hochvakuumbereich ist es möglich, die Rotorwelle in deren Endbereichen zu lagern.

In besonders bevorzugter Ausführungsform ist die Ausnehmung in einem Gehäuseelement, d.h. vorzugsweise in einem mit dem Gehäuse verbundenen stationären Element, angeordnet. Eine Öffnung der Ausnehmung ist hierbei vorzugsweise in Richtung der Rotorwelle gerichtet. Insbesondere ist die Ausnehmung kreisringförmig und umgibt die Rotorwelle vollständig. Somit ist es möglich, innerhalb der Ausnehmung eine ringförmige Spule eines Elektromagneten anzuordnen. Hierbei können die elektrischen Zuleitungen vorzugsweise durch das Gehäuse in die Ausnehmung und nicht von Seiten der in Richtung der Rotorwelle vorgesehenen Öffnung der Ausnehmung zugeführt werden.

Zur Druckkapselung, d.h. zur Abdichtung der Ausnehmung, wäre es beispielsweise auch möglich, nach dem Anordnen der Spule in der Ausnehmung diese mit Kunstharz oder dgl. auszugießen. Bei sehr niedrigen Drücken weist das Verwenden von Kunstharz oder dgl. jedoch den Nachteil auf, dass beispielsweise Weichmacher im Hochvakuum ausgasen, wodurch beispielsweise ein Verfälschen von Analyseergebnissen auftreten kann. In bevorzugter Ausführungsform ist die Öffnung der Ausnehmung erfindungsgemäß durch ein insbesondere rohrförmiges Verschließelement dicht verschlossen. Die vorzugsweise nach innen in Richtung der Rotorwelle weisende Öffnung kann somit auf einfache Weise durch ein rohrförmiges Schließelement verschlossen werden. Bei einer insbesondere kreisringzylindrischen Ausnehmung entspricht die Öffnung der Ausnehmung der inneren Mantelfläche des Kreisringzylinders. Das Verschließelement kann vorzugsweise über Dichtelemente, wie O-Ringe dichtend mit dem Gehäuseelement verbunden sein.

Nachfolgend wird die Erfindung anhand bevorzugter Ausführungsformen unter Bezugnahme auf die anliegenden Zeichnungen näher erläutert.

Es zeigt:

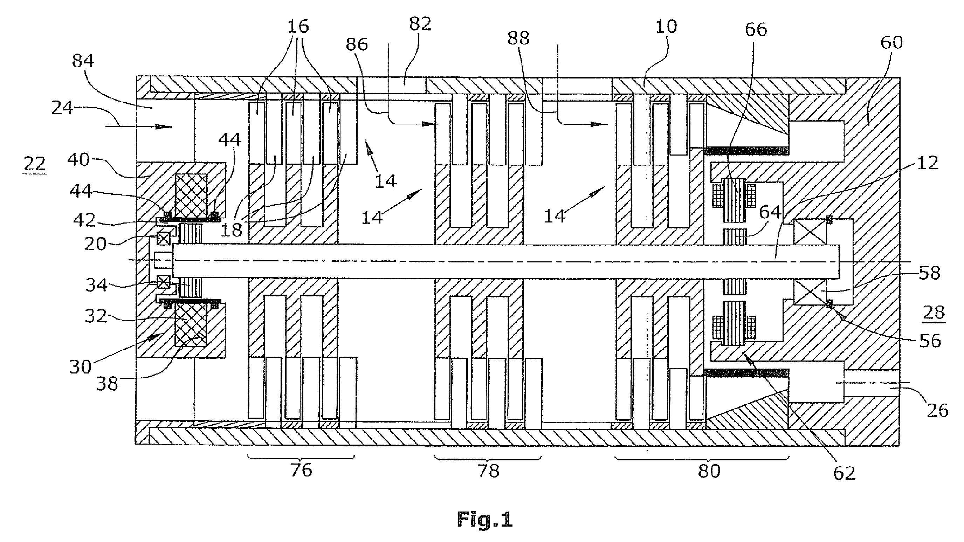

- Fig. 1: eine schematische Schnittansicht einer Multi-Inlet-Pumpe mit erfindungsgemäßer Lageranordnung.

Eine Multi-Inlet-Pumpe, wie sie schematisch in Fig. 1 dargestellt ist, weist in einem Gehäuse 10 eine Rotorwelle 12 auf. Die Rotorwelle 12 trägt mehrere Rotoreinrichtungen 14. Jede Rotoreinrichtung 14 weist mehrere Rotorscheiben 16 auf. Zwischen den Rotorscheiben 16 sind Statorscheiben 18 angeordnet. Eine Saugseite 22 der Pumpe stellt den Hochvakuumanschluss dar, so dass Medium in Richtung eines Pfeils 24 angesaugt wird. Ein Auslass 26 der Turbomolekularpumpe bzw. die Druckseite 28 ist üblicherweise mit einer Vor-Vakuumpumpe verbunden.

Erfindungsgemäß weist eine saugseitige Lageranordnung 30 ein elektromagnetisches Lager auf. Dies weist eine Spule 32 eines Elektromagneten sowie ein fest mit der Rotorwelle 12 rotierendes Lagerelement 34 auf, bei dem es sich beispielsweise um sogenannte Elektrobleche handelt. Die Spule 32 ist in einer, im dargestellten Ausführungsbeispiel als Kreisring-Zylinder ausgebildeten, Ausnehmung 38 eines Gehäuseelements 40 ausgebildet. Die Ausnehmung 38 umgibt die Rotorwelle 12 in einem Endbereich, Die Ausnehmung 38 ist durch ein rohrförmiges Verschließelement 42 sowie Dichtelemente 44, bei denen es sich insbesondere um O-Ringe handelt, verschlossen, so dass die Ausnehmung 38 druckgekapselt ist. Innerhalb der Ausnehmung 38 herrscht somit nicht das in dem Bereich 22 herrschende hohe Vakuum. Hierdurch ist vermieden, dass die in der Spule vorhandenen zahlreichen Hohlräume das Erreichen des Enddrucks erschweren oder gar verhindern.

Zusätzlich weist die dargestellte saugseitige Lageranordnung 30 ein beispielsweise als Kugellager ausgebildetes, mechanisches Fanglager 20 auf. Das Fanglager 20 ist in dem Gehäuseelement 40 angeordnet und weist einen geringen Abstand zu einem Zapfen der Welle 12 auf. Das Fanglager 20 dient im Wesentlichen zur Gewährleistung von Notlaufeigenschaften bei einem Ausfall des elektromagnetischen Lagers. Im dargestellten Ausführungsbeispiel ist das Gehäuseelement 40 topfförmig ausgebildet und umgibt einen saugseitigen Endbereich der Rotorwelle 12.

Im dargestellten Ausführungsbeispiel ist die auf der Druckseite 28 vorgesehene Lageranordnung 56 als Wälzlager, insbesondere als Kugellager 58 ausgebildet. Hierbei ist das Kugellager 58 derart ausgebildet, bzw. mit einem Gehäusedeckel 60 verbunden, dass durch das Kugellager 58 sowohl axiale als auch radiale Kräfte aufgenommen werden können.

Die saugseitige Lageranordnung 30 dient somit erfindungsgemäß ausschließlich zur radialen Lagerung der Welle 12, wobei die druckseitige Lageranordnung 56 zur axialen und radialen Lagerung der Welle 12 dient.

Besonders bevorzugt ist es, dass eine axiale Vorspannung des Lagers 58 erfolgt. Dies kann mit Hilfe der als elektromagnetisches Lager ausgebildeten saugseitigen Lageranordnung 30 erfolgen. Eine entsprechende Vorspannung kann bereits durch einen geringen axialen Versatz zwischen der Spule 32 und dem Lagerelement 34 erfolgen. Ebenso ist es möglich, eine axiale Vorspannung der Lageranordnung 56 mit Hilfe eines Elektromotors 62 zu realisieren. Der Motor 62, der im dargestellten Ausführungsbeispiel von dem Gehäusedeckel 60 getragen ist, weist beispielsweise einen mit der Rotorwelle 12 verbundenen Permanentmagneten 64 sowie eine Spulenanordnung 66 auf. Durch einen axialen Versatz zwischen den Permanentmagneten 64 und der Spulenanordnung 66 kann ebenfalls eine Vorspannung des Kugellagers 58 erfolgen.

Die in ihren beiden Endbereichen über die Lageranordnungen 30 und 56 gelagerte Rotorwelle 12 weist bei einer Multi-Inlet-Pumpe mehrere Rotoreinrichtungen zur Ausbildung mehrerer Verdichterstufen 76, 78, 80 auf. Bei den ersten beiden Verdichterstufen 76, 78 handelt es sich im dargestellten Ausführungsbeispiel um Turbomolekularpumpen, die jeweils einen Rotor 14 mit Rotorscheiben 16 aufweisen. Zwischen den Rotorscheiben 16 sind Statorscheiben 18 angeordnet. Die beiden Rotoren 14 sind in einem Abstand zueinander auf der Rotorwelle 12 angeordnet. Zwischen den beiden Rotoren 14 weist das Gehäuse 10 eine Einlassöffnung 82 auf, bei der es sich um den Zwischeneinlass handelt.

Ferner weist die dargestellte Multi-Inlet-Pumpe einen Haupteinlass 84, bei dem es sich um den Hochvakuumanschluss handelt, auf. Durch den Haupteinlass strömt das angesaugte Gas in Richtung des Pfeils 24. Im Bereich des Zwischeneinlasses 82 wird zusätzlich, wie durch den Pfeil 86 dargestellt, durch den Zwischeneinlass Medium angesaugt und in Fig. 1 nach rechts gefördert.

Die dritte Verdichterstufe fördert das Medium sodann, wie durch einen Pfeil 88 dargestellt, in Richtung der Druckseite 28 bzw. des Auslasses 26. Mit dem Auslass 26 ist üblicherweise eine Vor-Vakuumpumpe verbunden. Die dritte Verdichtungsstufe 80 kann beispielsweise eine Holweck-stufe oder dgl. aufweisen.

Durch die erfindungsgemäße Ausgestaltung der saugseitigen Lageranordnung 30 ist es möglich, die beiden Lageranordnungen 56, 30 an den Wellenenden vorzusehen, so dass ein maximaler Lagerabstand realisierbar ist.

## Patentansprüche

1. Vakuumpumpe, insbesondere Turbomolekularpumpe oder Multi-Inlet-Pumpe, mit
einer mindestens eine Rotoreinrichtung (14) tragenden Rotorwelle (12), und
einer druckseitigen Lageranordnung (56) und einer saugseitigen Lageranordnung (30) zur Lagerung der Rotorwelle (12),
wobei die saugseitige Lageranordnung (30) ein elektromagnetisches Lager (32, 34) zur radialen Lagerung der Rotorwelle (12) und die druckseitige Lageranordnung (56) ein Wälzlager (58) zur axialen und radialen Lagerung der Rotorwelle aufweist.

2. Vakuumpumpe nach Anspruch 1, **dadurch gekennzeichnet, dass** die saugseitige Lageranordnung (30) ausschließlich zur radialen Lagerung dient.

3. Vakuumpumpe nach Anspruch 1 oder 2, **gekennzeichnet durch** eine Vorspanneinrichtung zur axialen Vorspannung des Wälzlagers (58).

4. Vakuumpumpe nach Anspruch 3, **dadurch gekennzeichnet, dass** die Vorspanneinrichtung durch die saugseitige Lageranordnung (30) ausgebildet ist.

5. Vakuumpumpe nach Anspruch 3 oder 4, **dadurch gekennzeichnet, dass** die Vorspanneinrichtung durch einen die Rotorwelle (12) antreibenden Elektromotor (62) ausgebildet ist.

6. Vakuumpumpe nach einem der Ansprüche 3 bis 5, **dadurch gekennzeichnet, dass** Vorspanneinrichtung durch einen gesonderten vorzugsweise im Bereich des Wälzlagers (58) angeordneten Magneten insbesondere einen Permanentmagneten ausgebildet ist.

7. Vakuumpumpe nach einem der Ansprüche 1 bis 6, **dadurch gekennzeichnet, dass** die saugseitige Lageranordnung (30) und/oder die druckseitige Lageranordnung (56) an einem Ende der Rotorwelle angeordnet ist.

8. Vakuumpumpe nach einem der Ansprüche 1 bis 7, **dadurch gekennzeichnet, dass** alle Rotoreinrichtungen (14) zwischen den Lageranordnungen (30, 56) angeordnet sind.

9. Vakuumpumpe nach einem der Ansprüche 1 bis 8, **dadurch gekennzeichnet, dass** die Rotorwelle (12) zwischen den beiden Lageranordnungen (30, 56) eine Länge von mindestens 170 mm, insbesondere mindestens 220 mm, bei einem Rotordurchmesser von 100 bis 140 mm, insbesondere ca 130 mm aufweist.

10. Vakuumpumpe nach einem der Ansprüche 1 bis 9, **dadurch gekennzeichnet, dass** die Rotorwelle (12) zwischen den beiden Lageranordnungen (30, 56) eine Länge aufweist, die größer oder gleich dem Rotordurchmesser ist.

11. Vakuumpumpe nach einem der Ansprüche 1 bis 10, **dadurch gekennzeichnet, dass** zumindest das saugseitige Ende der Rotorwelle (12) einen verringerten Durchmesser aufweist, der insbesondere kleiner gleich 0,66 mal Wurzel aus dem Rotordurchmesser, und besonders bevorzugt kleiner 6 mm ist.

12. Vakuumpumpe nach einem der Ansprüche 1 bis 11, **dadurch gekennzeichnet, dass** die saugseitige Lageranordnung (30) innerhalb einer saugseitig verschlossenen Kartusche (40) angeordnet ist.

13. Vakuumpumpe nach einem der Ansprüche 1 bis 11, **dadurch gekennzeichnet, dass** die saugseitige Lageranordnung in einem Hochvakuumbereich angeordnet ist, in dem der Druck kleiner als 10⁻⁵ mbar, insbesondere kleiner als 10⁻¹⁰mbar ist.
